**Europäisches Patentamt**

(19) **European Patent Office**

**Office européen des brevets**

(11) Numéro de publication: **0 264 316**
**B1**

(12) **FASCICULE DE BREVET EUROPEEN**

(45) Date de publication du fascicule du brevet:
**28.02.90**

(21) Numéro de dépôt: **87402113.2**

(22) Date de dépôt: **22.09.87**

(51) Int. Cl.⁴: **F28F 27/00**, F28F 25/12,
F28C 1/12, F16K 7/00,
F16L 55/12

(54) **Dispositif pour le réglage du débit d'air dans des réfrigérants atmosphériques à tirage naturel.**

(30) Priorité: **30.09.86 FR 8613580**

(43) Date de publication de la demande:
**20.04.88 Bulletin 88/16**

(45) Mention de la délivrance du brevet:
**28.02.90 Bulletin 90/9**

(84) Etats contractants désignés:
**AT BE CH DE ES FR GB GR IT LI LU NL SE**

(56) Documents cités:
**EP-A- 0 058 109**
**FR-A- 683 782**
**FR-A- 1 371 857**
**FR-A- 2 360 059**
**US-A- 1 814 914**
**US-A- 2 946 555**
**US-A- 3 011 518**
**US-A- 3 236 298**
**US-A- 3 367 413**

(73) Titulaire: **HAMON-SOBELCO S.A., 50-58, Rue Capouillet,
B-1060 Bruxelles(BE)**

(72) Inventeur: **Bosne, Jacques, 5, rue des Sables,
F-78220 Viroflay(FR)**

(74) Mandataire: **Le Guen, Gérard et al, CABINET
LAVOIX 2, place d'Estienne d'Orves, F-75441 Paris
Cédex 09(FR)**

ACTORUM AG

## Description

La présente invention concerne un dispositif pour le réglage du débit d'air dans une installation de mise en contact direct d'un fluide avec un flux d'air atmosphérique et notamment dans des réfrigérants atmosphériques humides à tirage naturel, comprenant généralement une tour à l'intérieur de laquelle est disposé au moins un échangeur de chaleur entre un fluide et l'air atmosphérique.

Dans les réfrigérants à tirage naturel, le débit d'air augmente par temps froid alors qu'au contraire, il faudrait le diminuer pour éviter la formation de glace sur les surfaces des échangeurs de chaleur avec toutes les conséquences néfastes qui en résultent.

Dans le brevet FR-A 2 499 706, on a proposé un procédé pour éviter la prise en glace dans un réfrigérant. Les orifices d'entrée d'air sont munis de treillis métalliques sur lesquels on fait ruisseler de l'eau froide pour former des rideaux de glace obturant partiellement les orifices et ensuite, lorsque la température de l'air est suffisamment élevée, on fait fondre les rideaux de glace. L'inconvénient de cette installation réside surtout dans le fait qu'elle fonctionne assez lentement et ne permet pas un réglage rapide et fiable du débit d'air.

On connait également par le FR-A 2 360 059 un dispositif du type visé par l'invention, comportant des obturateurs à enveloppe sous pression déformable, pouvant passer d'une position de fermeture où elle obstrue au moins partiellement le trajet du flux d'air à une position d'ouverture où ses parois sont rapprochées et laissent le passage au flux d'air.

De son côté le FR-A 683 782 décrit une enveloppe déformable sous pression pouvant passer d'une position de fermeture à une position d'ouverture sous l'action de moyens de tension.

Le but de la présente invention est de créer à volonté des pertes de charge variables dans le circuit d'air du réfrigérant.

Ce but est atteint conformément à l'invention en ce que le dispositif comprend des moyens de tension de l'enveloppe permettant de la faire passer d'une position de fermeture où elle obstrue au moins partiellement le trajet du flux d'air, à une position d'ouverture où ses parois sont rapprochées et laissent le passage au flux d'air, et chaque obturateur comprend deux barres parallèles, disposées à l'intérieur de l'enveloppe, reliées à celle-ci, et mobiles l'une par rapport à l'autre sous l'action desdits moyens de tension.

Les deux barres parallèles reliées à ladite enveloppe sont mobiles l'une par rapport à l'autre sous l'action desdits moyens de tension, et leur déplacement relatif permet de faire passer l'enveloppe d'une position à l'autre.

En variante, les deux barres peuvent être disposées dans une enveloppe comprenant deux sous enveloppes sous pression de part et d'autre du plan de ces deux barres.

Les moyens de tension peuvent être notamment des vérins, ces vérins pouvant être notamment disposés à l'intérieur de l'enveloppe et ainsi protégés de l'air atmosphérique.

Ces moyens de tension peuvent être également constitués par des systèmes de câbles comportant un câble mobile relié à l'une des barres de chaque obturateur.

L'invention sera mieux comprise à l'aide de la description qui va suivre, donnée uniquement à titre d'exemple et faite en se référant aux dessins annexés, sur lesquels:

— la Fig. 1 est une vue schématique en coupe d'un réfrigérant équipé de dispositifs suivant l'invention agencés en amont des échangeurs de chaleur;

- la Fig.2 est une vue schématique en coupe d'un réfrigérant selon la ligne I-I de la Fig.1, montrant les dispositifs selon l'invention en position d'ouverture;

- la Fig.3 est une vue à plus grande échelle d'une partie de la Fig.1 montrant les dispositifs selon l'invention en position de fermeture;

- les Fig.4a et 4b sont des coupes horizontales d'un autre dispositif selon l'invention, la Fig.4a le montrant en position d'ouverture et la Fig.4b en position de fermeture;

- la Fig.5a et 5b sont des coupes horizontales d'une autre forme de réalisation d'un dispositif selon l'invention, la Fig.5a le montrant en position d'ouverture et la Fig.5b en position de fermeture;

- la Fig.6 est une coupe horizontale d'une autre forme de réalisation d'un dispositif suivant l'invention;

- la Fig.7 est une vue schématique en coupe d'un réfrigérant équipé de dispositifs suivant l'invention agencés en aval des échangeurs de chaleur;

- les Fig.8a et 8b sont des coupes verticales du dispositif utilisé dans le réfrigérant représenté sur la Fig.7, la Fig.8a le montrant en position d'ouverture et la Fig.8b en position de fermeture;

- la Fig.9 est une coupe verticale montrant un autre mode de réalisation d'un dispositif selon l'invention dans un cadre;

- la Fig.10 est une vue partielle de dessus du dispositif de la Fig.9;

- la Fig.11 est une coupe verticale montrant une variante d'agencement des dispositifs suivant l'invention.

- les Figs 12a et 12b sont des vues schématiques en coupe de variantes de la version représentée sur la Fig. 7, équipées de dispositifs suivant l'invention agencés en amont des échangeurs de chaleur.

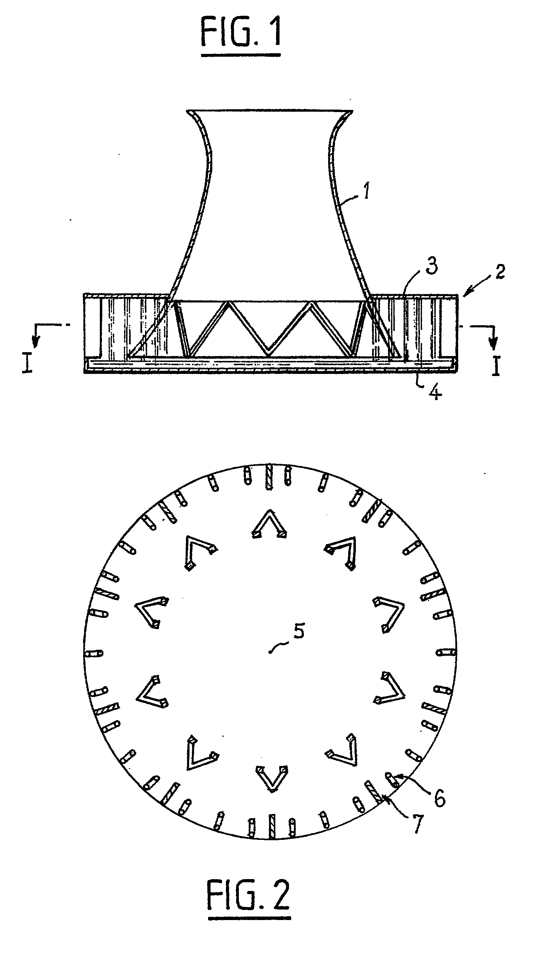

L'installation représentée sur la Fig.1 est un réfrigérant atmosphérique à tirage naturel du type à courants croisés comprenant une tour 1 formant cheminée à la base de laquelle sont ménagées des ouvertures 2 d'entrée d'air périphériques. Ce réfrigérant comporte intérieurement au voisinage des ouvertures 2, un dispositif de pulvérisation d'eau 3. L'eau est récupérée dans un bassin 4.

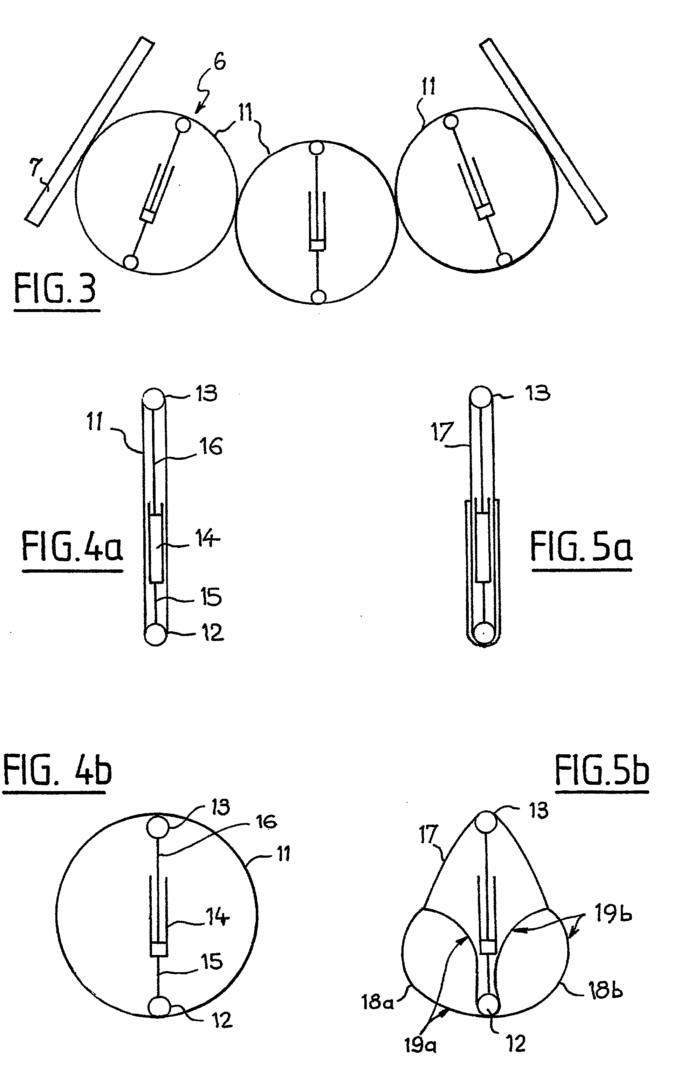

Comme représenté sur les Fig.2 et 3, un ensemble d'obturateurs 6 sont agencés radialement par rapport au centre 5 de ce réfrigérant entre des cloisons 7 également radiales délimitant les ouvertures d'entrée d'air 2 à la périphérie du pied du réfrigérant. Les obturateurs représentés sont verticaux, mais ils peuvent également être inclinés, par exemple pour les réfrigérants à courants croisés dont les entrées d'air sont également inclinées.

Les obturateurs présents dans le réfrigérant représenté sur les Fig.1 à 3 sont représentés en détail sur les Fig.4a et 4b. Chaque obturateur comporte une enveloppe déformable 11 formée par une paroi souple et étanche, par exemple un tissu enduit de matière plastique. L'enveloppe 11 est gonflée avec un fluide quelconque. Ce fluide peut être notamment de l'air car il a une densité suffisamment faible pour éviter des différences de pression appréciables entre le haut et le bas du dispositif.

A l'intérieur de cette enveloppe et en contact avec la paroi de l'enveloppe sont disposées deux barres verticales 12 et 13, alignées radialement, la barre 12 étant placée en amont et la barre 13 en aval par rapport à la direction du flux d'air. La barre 12 est fixe et la barre 13 est mobile horizontalement par rapport à la barre 12. Ce mouvement de la barre 13 est commandé par un vérin 14 qui est relié à la barre 12 par une tige fixe 15 et à la barre 13 par la tige mobile 16 du piston du vérin 14.

Lorsque le vérin 14 n'est pas sous pression, l'enveloppe 11 présente, comme représenté sur la Fig.4b, une section plus ou moins circulaire qui dépend de la surpression régnant à l'intérieur de l'enveloppe ainsi que de la pression exercée par le flux d'air. L'enveloppe a alors une position dite de fermeture.

Lorsque le vérin 14 est mis sous pression, la tige 16 et la barre 13 se déplacent et tendent radialement l'enveloppe 11.

L'enveloppe 11 prend alors, comme représenté sur la Fig.4a, une position dite d'ouverture dans laquelle les parois de l'enveloppe 11 se rapprochent du vérin 14.

Lorsque le dispositif est en position d'ouverture, il est très important que les barres 12 et 13 et le vérin 14 coopèrent pour établir une tension très forte de l'enveloppe 6 afin d'éviter les vibrations sous l'influence du flux d'air. Il est en outre préférable que l'enveloppe 11 soit munie de renforts verticaux, non représentés sur le dessin, en particulier pour limiter les différences de variation de la déformation de l'enveloppe 11 dans un flux d'air présentant des vitesses d'air non uniforme sur la hauteur.

Il est à noter que l'on peut décoller la glace qui pourrait se former sur les obturateurs en modifiant leur section. A cet effet, on peut jouer sur la pression à l'intérieur de l'enveloppe et la pression exercée par les moyens de tension.

Comme représentés sur les Fig.2 et 3, les dispositifs selon l'invention sont espacés régulièrement à la périphérie du bas du réfrigérant et la distance entre les dispositifs est telle que, en position de fermeture, les parois des dispositifs adjacents soient en contact l'une de l'autre pour obstruer le flux d'air. Les cloisons 7 ont pour effet de donner de la stabilité aux dispositifs par le biais des dispositifs extrêmes qui sont en contact avec les cloisons lorsqu'ils sont en position de fermeture. Chaque groupe de dispositifs enclavé entre deux cloisons forme un secteur de réglage. Dans sa forme la plus simple, ce secteur est soit totalement ouvert (les dispositifs sont en position d'ouverture), soit complètement fermé (les dispositifs sont en position de fermeture).

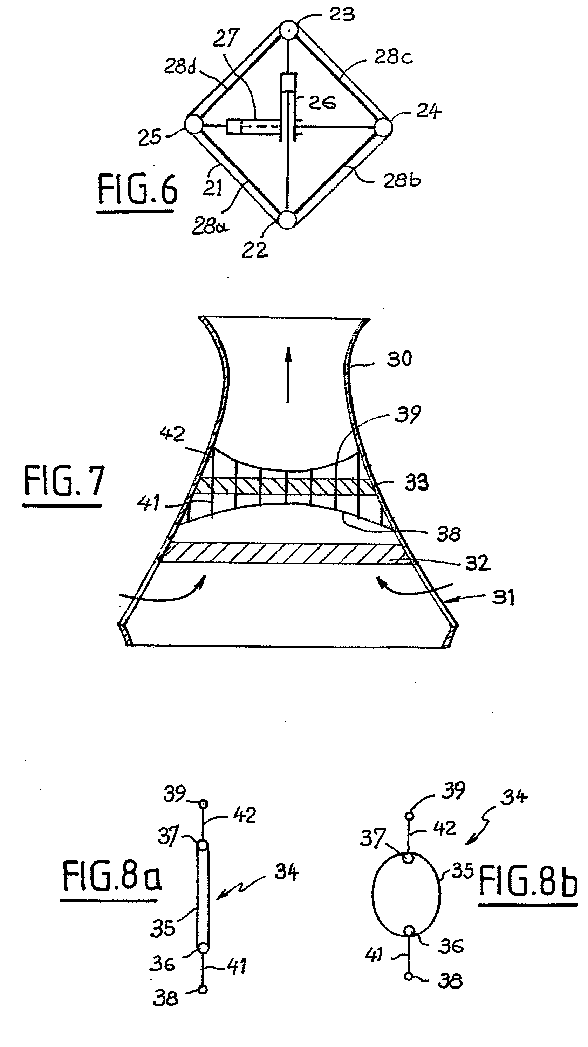

Les Fig.5a et 5b représentent un autre mode de réalisation de l'invention. Chaque obturateur comporte comme le dispositif représenté sur les Fig.4a et 4b, une enveloppe 17 et à l'intérieur de cette enveloppe 17 une barre fixe 12 disposée en amont par rapport à la direction du flux d'air et une barre mobile 13 disposée en aval et un vérin 14.

Dans ce mode de réalisation, l'enveloppe 17 n'est pas sous pression et comporte de part et d'autre du vérin, du côté de la barre 12, deux parois souples 18a et 18b qui recouvrent partiellement la première enveloppe 17 et s'étendent sur toute la hauteur de celle-ci. Les enveloppes 19a et 19b formées respectivement par une partie de l'enveloppe 17 et par les parois 18a et 18b sont sous pression. Ces enveloppes peuvent être cloisonnées verticalement de façon à former des éléments distincts. Ceci permet la préfabrication d'enveloppes 19a et 19b de taille réduite et il n'y a plus de problème d'étanchéité ou d'assemblage à réaliser lors de l'installation du dispositif car l'enveloppe principale 17 n'est pas sous pression.

Un autre mode de réalisation est représenté sur la Fig.6. Il comprend une enveloppe déformable 21 sous pression formée par une paroi souple. A l'intérieur de cette enveloppe sont disposées deux paires de barres verticales respectivement 22, 23, 24 et 25 disposées dans deux plans orthogonaux. Les barres 22 et 23 sont reliées par un vérin 26 et les barres 24 et 25 sont également reliées par un vérin 27. Les barres 22 et 23 jouent le même rôle que les barres 12 et 13 du dispositif des Fig.4a et 4b (la barre 22 étant fixe et la barre 23 étant mobile).

Des éléments de liaison articulés 28a, 28b, 28c et 28d qui peuvent être horizontaux ou être inclinés relient respectivement les barres 25 et 22, 22 et 24, 24 et 23, 23 et 25. Un tel dispositif permet de régler plus aisément la forme de l'enveloppe et en particulier les vibrations.

Un autre mode de réalisation d'un dispositif selon l'invention est représenté sur les Fig.7, 8a et 8b dans le cas d'un montage à l'intérieur d'un réfrigérant à contre-courant.

Le réfrigérant à contre-courant représenté sur la Fig.7 comprend une tour 30 formant cheminée comportant des ouvertures 31 d'entrée d'air à sa partie inférieure. Juste au-dessus de ces entrées d'air est disposé un corps d'échange 32. Au-dessus de ce corps d'échange 32 est suspendu un dispositif 33 selon l'invention qui est donc disposé en aval du corps d'échange 32 par rapport au flux d'air.

Le dispositif 33 comprend un ensemble d'obturateurs distincts 34 tels que représentés sur les Fig.8a et 8b, qui sont tous parallèles à un diamètre. Chaque dispositif 34 comprend une enveloppe déformable souple 35 sous pression et à l'intérieur de cette enveloppe deux barres parallèles 36 et 37, la barre 37 étant en aval de la barre 36 par rapport au flux d'air. Ces barres 36 et 37 sont reliées à des câbles respectivement 38 et 39, suspendus à l'intérieur de la tour 30 par l'intermédiaire de réseaux de câbles respectivement 41 et 42. Le câble 38 est fixe et le câble 39 est mobile, grâce à un système de poulies non représenté.

En position d'ouverture, comme représenté sur la Fig.8a, le câble 39 est en position haute. L'enveloppe 35 est alors tendue vers le haut et ses parois sont proches l'une de l'autre.

Lorsqu'on abaisse le câble 39, l'enveloppe 35 prend progressivement une forme sensiblement circulaire et obstrue ainsi plus ou moins le passage de l'air.

Les câbles 38 et 39 peuvent naturellement être remplacés par des supports rigides, l'un d'entre eux étant mobile, mais cette solution peut avoir l'inconvénient d'être plus onéreuse.

Plusieurs variantes de suspension des dispositifs peuvent être envisagées. Les dispositifs peuvent être également disposés suivant des rayons de la cheminée, ou encore être suspendus à d'autres éléments porteurs. Ils peuvent en outre couvrir tout ou partie de la section de passage du flux d'air.

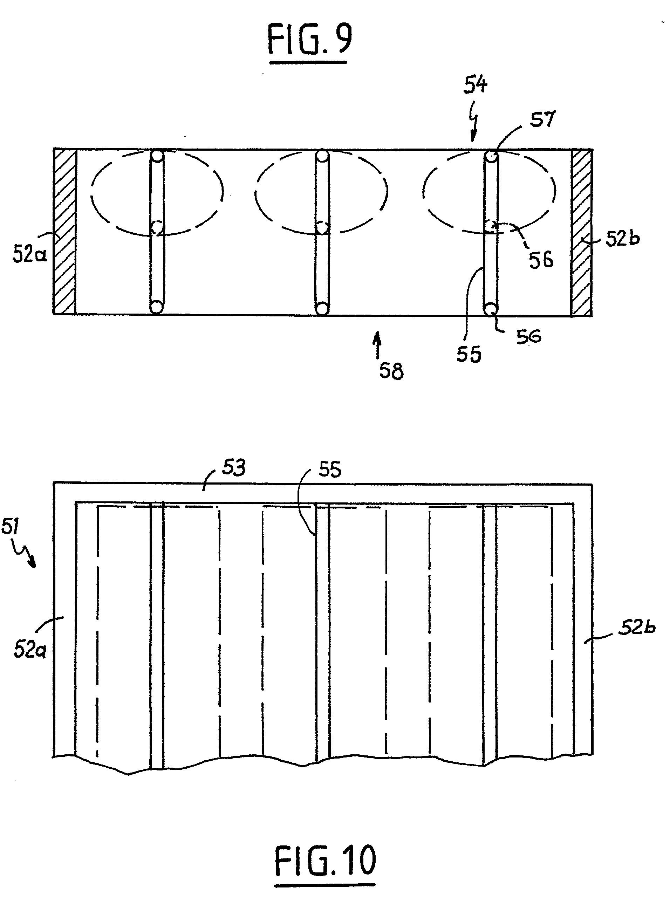

On a représenté sur les Fig. 9 et 10, un autre mode de réalisation d'un dispositif selon l'invention comportant un cadre.

Ce dispositif comprend ainsi un cadre rectangulaire 51 comportant des panneaux verticaux 52a et 52b parallèles reliés par des panneaux verticaux tels que 53 orthogonaux aux précédents.

Dans ce cadre, sont montés un certain nombre d'obturateurs déformables 54. Chaque obturateur comprend une enveloppe souple 55 et à l'intérieur de cette enveloppe souple 55 deux barres parallèles l'une en amont 56, l'autre en aval 57. (le flux d'air est représenté par la flèche 58).

Les barres inférieures 56 sont mobiles et guidées par des moyens connus, non représentés, disposés sur les panneaux 53, tandis que les barres 57 sont fixes.

En position d'ouverture, les enveloppes 55 (représenté en trait continu) sont tendues vers le bas par les barres 56. Les parois de l'enveloppe sont alors rapprochées. Lorsqu'on remonte les barres 56, les enveloppes reprennent progressivement une forme sensiblement à section circulaire (représentée en pointillé) et obstruent plus ou moins totalement la circulation du flux d'air.

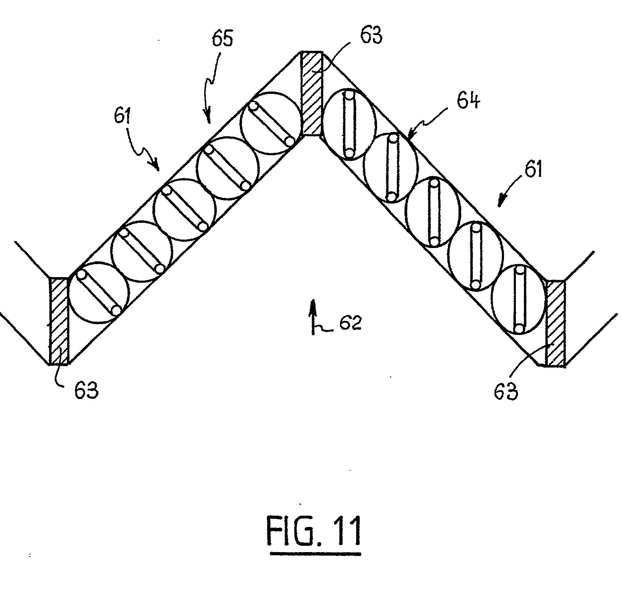

La Fig.11 représente une variante des dispositifs représentés sur les Fig.9 et 10. Les cadres 61 sont placés obliquement par rapport au flux d'air circulant suivant la flèche 62. Les cloisins 63 sont alors parallèles au flux d'air. De cette façon, sont créées des structures en forme de V. Comme il ressort de la Fig.11, les obturateurs peuvent être agencés verticalement (obturateurs 64) ou obliquement (obturateurs 65).

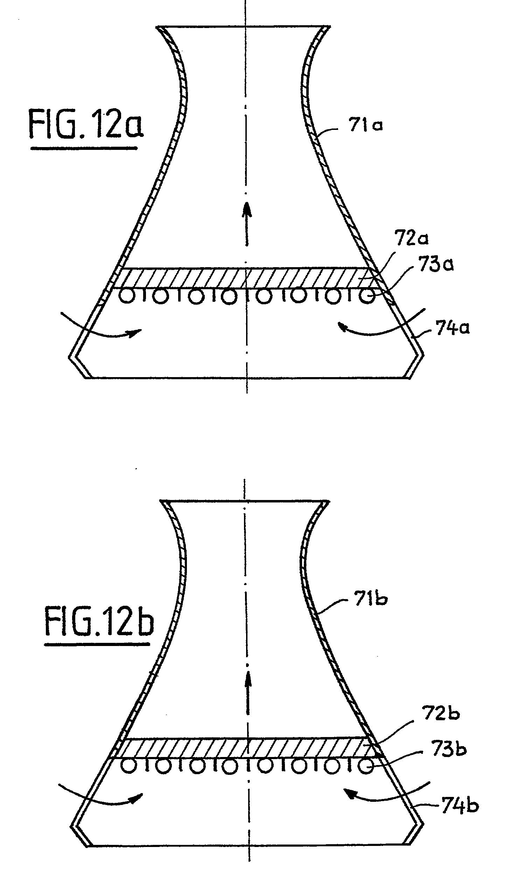

Une autre disposition possible des obturateurs est schématisée sur les figures 12a, 12b qui représentent des tours de réfrigération 71a et 71b à contre-courant avec corps d'échange 72a et 72b.

Les obturateurs 73a et 73b sont disposés juste sous les corps d'échange, c'est-à-dire que les obturateurs sont alors comme dans le cas de la Fig. 1 situés en amont par rapport au flux d'air.

La position des obturateurs par rapport à l'entrée d'air peut être soit celle de la Fig. 12a c'est-à-dire au-dessus de l'entrée d'air 74a, soit celle de la Fig. 12b c'est-à-dire au-dessous de la partie supérieure de l'entrée d'air 74b.

Cette disposition est particulièrement avantageuse dans le cas des réfrigérants équipés de récupérateurs comme décrits dans le brevet français FR-A-2 288 959 dans lesquels le liquide refroidi est récupéré juste au-dessous des échangeurs de chaleur. Les obturateurs se trouvent alors dans une zone où le liquide ne circule pas.

Lorsque les récupérateurs comportent des canaux ou goulottes comme indiqué dans le brevet français FR-A-2 288 959, les obturateurs peuvent être situés soit parallèlement soit perpendiculairement ou même dans un sens quelconque par rapport à ces canaux ou goulottes dans le plan horizontal.

Tous les dispositifs d'obturation décrits ci-dessus peuvent être commandés par un système permettant de ne gonfler que quelques obturateurs au lieu de la totalité des obturateurs en même temps.

Dans ce cas les obturateurs gonflés sont uniformément répartis ou non. Le nombre d'obturateurs gonflés augmentera lorsque le froid sera plus accentué.

Sur les figures 12a et 12b un obturateur sur deux est représenté gonflé.

Si le froid s'accentue on gonflera la totalité des obturateurs.

D'une façon générale avec les dispositifs selon l'invention on pourra éventuellement ne pas répartir régulièrement les obturateurs mis en activité si cela permet de rendre le système plus efficace, par exemple pour éviter des formations locales de glace.

Il sera aussi possible pour éviter les gels locaux de décaler successivement l'obturation, en gonflant la travée suivante en même temps qu'on dégonfle celle qui était gonflée. Et ainsi de suite. Ce décalage pourra s'effectuer à période fixe pour des conditions extérieures données, la période étant choisie de façon à éviter le gel localisé. La période sera modifiée en fonction des conditions extérieures (climatiques ou autres).

Dans un mode avantageux de réalisation, le dispositif selon l'invention comprend en outre des moyens pour faire varier la pression à l'intérieur de chaque obturateur d'une valeur élevée lorsque chaque obturateur est en position de fermeture à une valeur faible ou nulle lorsque chaque obturateur est en position d'ouverture et inversement.

Ainsi par exemple lorsque les obturateurs sont en position d'ouverture comme représenté sur la figure 4A l'enveloppe 11 est soumise à une faible pression voir à une pression nulle, qui favorise la mise en position allongée de ladite enveloppe par les vérins 14. Ceux-ci n'ont donc que peu d'effort à fournir pour maintenir l'enveloppe 11 dans cette configuration. Si l'on veut maintenant passer de cette position comme représentée en 4a à une position de fermeture comme représenté par exemple sur la figure 4b, on augmentera progressivement la pression dans les obturateurs, pendant qu'on laissera s'échapper une partie de l'air qui se trouvait à l'intérieur des vérins 14.

Les avantages d'un tel dispositif sont de deux sortes :

1 °) comme il a été indiqué ci-dessus le dispositif peut fonctionner avec des verins de plus faible puissance

2 °) la fermeture du débit d'air de refroidissement peut être plus efficace du fait que l'on peut mettre une pression plus importante dans les obturateurs en position de fermeture.

Ceci se comprend aisément sur les figures 3, 9 et 11 où les flux d'air représentés en 58 Fig. 9 et 62 Fig. 11 auront d'autant plus de difficultés à passer que les obturateurs seront serrés fortement les uns contre les autres.

Un tel mode de réalisation s'applique évidemment à toutes les configurations décrites et en particulier il s'applique aussi bien lorsque les moyens de tension sont des vérins que lorsque les moyens de tension sont un autre système mécanique équivalent tel que ressorts par exemple.

Bien que cela n'ait pas été illustré sur les dessins il va de soi que le dispositif selon l'invention est également applicable :
- en aval des surfaces d'échange dans les réfrigérants à courants croisés,
- dans les entrées d'air des réfrigérants à contre-courant,
- aux réfrigérants secs,
- à toute installation industrielle ou l'on a besoin de régler des débits d'air importants.

**Revendications**

1. Dispositif pour le réglage du débit d'air dans une installation de mise en contact d'un fluide avec l'air atmosphérique, comprenant sur le trajet du flux d'air au moins un obturateur déformable (6, 34, 54) comprenant une enveloppe déformable (11, 19a, 19b, 21, 35) sous pression, caractérisé en ce qu'il comprend des moyens de tension de l'enveloppe permettant de la faire passer d'une position de fermeture où elle obstrue au moins partiellement le trajet du flux d'air, à une position d'ouverture où ses parois sont rapprochées et laissent le passage au flux d'air, en ce que chaque obturateur comprend deux barres parallèles (12 et 13, 22 et 23, 36 et 37, 56 et 57), disposées à l'intérieur de l'enveloppe, reliées à celle-ci, et mobiles l'une par rapport à l'autre sous l'action desdits moyens de tension.

2. Dispositif selon la revendication 1, caractérisé en ce que les deux barres (12 et 13) sont disposées dans une enveloppe (17) comprenant deux sous-enveloppes (19a et 19b) sous pression de part et d'autre du plan des deux barres.

3. Dispositif selon l'une quelconque des revendications 1 et 2, caractérisé en ce que chaque obturateur comprend deux autres barres (24 et 25) mobiles l'une par rapport à l'autre et disposées dans un plan orthogonal au plan des premières barres (22 et 23).

4. Dispositif selon l'une quelconque des revendications 1 à 3, caractérisé en ce que lesdits moyens de tension sont constitués par au moins un vérin (14, 26).

5. Dispositif selon quelconque des revendications 1 à 4, caractérisé en ce que plusieurs obturateurs (6) sont enclavés entre des cloisons verticales (7) espacées régulièrement, définissant ainsi un secteur de réglage du flux d'air.

6. Dispositif selon l'une quelconque des revendications 1 et 2, caractérisé en ce que les moyens de tension comportent un câble mobile (39), relié à l'une des barres (37) de chaque obturateur.

7. Dispositif selon la revendication 6, caractérisé en ce que plusieurs obturateurs (34) sont suspendus à l'intérieur de l'installation et aménagés de façon à ce qu'ils s'étendent perpendiculairement à la direction du flux d'air, pour obtenir à une obstruction plus ou moins complète au flux d'air.

8. Dispositif selon l'une quelconque des revendications 1 à 3, caractérisé en ce qu'il comprend plusieurs obturateurs disposés dans un cadre (51) comprenant des panneaux verticaux (52a, 53b, 53) et permettant à une barre (56) mobile de se déplacer verticalement pour obtenir une obstruction plus ou moins complète au flux d'air.

9. Dispositif selon l'une quelconque des revendications 1 à 8, caractérisé en ce qu'il comprend en outre des moyens pour faire varier la pression à l'intérieur de chaque obturateur d'une valeur élevée lorsque chaque obturateur est en position de fermeture à une valeur faible ou nulle lorsque chaque obturateur est en position d'ouverture et inversement.

**Patentansprüche**

1. Vorrichtung zur Einstellung der Luftmenge in einer Einrichtung zur Kontaktierung eines Mediums mit atmosphärischer Luft, bei welcher auf dem Weg der Luftströmung wenigstens ein verformbarer Verschluß (6, 34, 54) mit einer unter Druck verformbaren Hülle (11, 19a, 19b, 21, 35) vorgesehen ist, dadurch gekennzeichnet, daß sie Spannmittel für die Hülle umfaßt, die es gestatten, sie aus einer Verschlußstellung, in der sie den Weg der Luftströmung wenigstens teilweise versperrt, in eine Öffnungstellung gelangen zu lassen, in der ihre Wände einander angenähert sind und der Luftströmung den Durchtritt lassen, und daß jeder Verschluß zwei parallele Stäbe (12 und 13, 22 und 23, 36 und 37, 56 und 57) umfaßt, die im Inneren der Hülle angeordnet, mit dieser verbunden und unter der Wirkung der Spannmittel relativ zueinander beweglich sind.

2. Vorrichtung nach Anspruch 1, dadurch gekennzeichnet, daß die beiden Stäbe (12 und 13) in einer Hülle (17) angeordnet sind, welche zwei Nebenhüllen (19a und 19b) umfaßt, die ihrerseits unter Druck auf den beiden Seiten der von den beiden Stäben bestimmten Ebene angeordnet sind.

3. Vorrichtung nach einem der Ansprüche 1 und 2, dadurch gekennzeichnet, daß jeder Verschluß zwei weitere Stäbe (24, 25) umfaßt, die zueinander beweglich und in einer Ebene angeordnet sind, die senkrecht auf der von den beiden ersten Stäben (22 und 23) bestimmten Ebene steht.

4. Vorrichtung nach einem der Ansprüche 1–3, dadurch gekennzeichnet, daß die Spannmittel von wenigstens einem Arbeitszylinder (14, 26) gebildet sind.

5. Vorrichtung nach einem der Ansprüche 1–4, dadurch gekennzeichnet, daß mehrere Verschlüsse (6) zwischen in regelmäßigen Abständen vorgesehene, vertikale Zwischenwände eingefügt sind, die auf diese Weise einen Einstellungssektor für die Luftströmung definieren.

6. Vorrichtung nach einem der Ansprüche 1 und 2, dadurch gekennzeichnet, daß die Spannmittel ein bewegliches Kabel (39) umfassen, das mit einem der Stäbe (37) jedes Verschlusses verbunden ist.

7. Vorrichtung nach Anspruch 6, dadurch gekennzeichnet, daß mehrere Verschlüsse (34) im Inneren der Einrichtung aufgehängt und derart angeordnet sind, daß sie sich senkrecht zur Richtung der Luftströmung erstrecken, um hierdurch eine mehr oder weniger vollständige Absperrung der Luftströmung zu erhalten.

8. Vorrichtung nach einem der Ansprüche 1–3, dadurch gekennzeichnet, daß sie mehrere Verschlüsse umfasst, die in einem Rahmen (51) angeordnet sind, der seinerseits vertikale Platten (52a, 52b, 53) umfaßt und es einem beweglichen Stab (56) gestattet, sich vertikal zu verschieben, um eine mehr oder weniger vollständige Absperrung der Luftströmung zu erhalten.

9. Vorrichtung nach einem der Ansprüche 1–8, dadurch gekennzeichnet, daß sie außerdem Mittel umfaßt, um den Druck im Inneren jedes Verschlusses von einem hohen Wert, wenn jeder Verschluß in Verschlußstellung ist, auf einen niederen Wert oder Null variieren zu lassen, wenn jeder Verschluß in Öffnungstellung ist, und umgekehrt.

**Claims**

1. Device for regulating the air flow in an installation for putting a fluid into contact with the atmospheric air, comprising, on the path of the air stream, at least one deformable closure means (6, 34, 54) comprising a case (11, 19a, 19b, 21, 35) which is deformable under pressure, characterised in that it comprises means for tensioning the case enabling it be changed from a closing position in which it closes off at least part of the air stream to an opening position in which its walls are closer together and leave a passage for the air stream; in that each closure means comprises two parallel bars (12 and 13, 22 and 23, 36 and 37, 56 and 57) which are arranged inside the case, are connected thereto and can be moved with respect to one another under the action of the said tensioning means.

2. Device as claimed in claim 1, characterised in that the two bars (12 and 13) are disposed in a case (17) comprising two sub-cases (19a and 19b) under pressure on each side of the plane of the two bars.

3. Device as claimed in any one of claims 1 and 2, characterised in that each closure means comprises two other bars (24 and 25) which are movable with respect to one another and arranged in an orthogonal plane with respect to the plane of the first bars (22 and 23).

4. Device as claimed in any one of claims 1 to 3, characterised in that the said tensioning means are formed by at least one jack (14, 26).

5. Device as claimed in any one of claims 1 to 4, characterised in that a plurality of closure means (6) are disposed between evenly spaced vertical partitions (7) which thus define a sector regulating the air stream.

6. Device as claimed in any one of claims 1 and 2, characterised in that the tensioning means comprise a mobile cable (39) connected to one of the bars (37) of each closure means.

7. Device as claimed in claim 6, characterised in that a plurality of closure means (34) are suspended inside the installation and arranged in such a way that they extend in a direction perpendicular to the direction of the air stream in order to close off the air stream more or less completely.

8. Device as claimed in any one of claims 1 to 3, characterised in that it comprises a plurality of closure means arranged in a frame (51) comprising vertical panels (52a, 52b, 53) and enabling a movable bar (56) to move vertically in order to achieve a more or less complete obstruction of the air stream.

9. Device as claimed in any one of claims 1 to 8, characterised in that it further comprises means for varying the pressure inside each closure means from a high value when each closure means is in the closing position to a low or zero value when each closure means is in the opening position and vice versa.

# FIG. 1

# FIG. 2

FIG.3

FIG.4a

FIG.5a

FIG. 4b

FIG.5b

FIG.6

FIG.7

FIG.8a

FIG.8b

## FIG.9

## FIG.10

FIG. 11

FIG.12a

FIG.12b